# EUROPÄISCHE PATENTANMELDUNG

(11) **EP 3 736 709 A1**
(43) Veröffentlichungstag der Anmeldung: **11.11.2020**
(21) Anmeldenummer: 19201156.7
(22) Anmeldetag: 02.10.2019
(51) Int. Cl.: G06F 16/55

(54) **KLASSIFIKATORSYSTEM UND VERFAHREN ZUM VERTEILTEN ERZEUGEN VON KLASSIFIKATIONSMODELLEN**

(30) Priorität: 10.05.2019 EP 19173947
(71) Anmelder: Aicura Medical GmbH, 12103 Berlin (DE)
(72) Erfinder: NIEHAUS, Sebastian, 21614 Buxtehude (DE); DIEBOLD, Michael, 14165 Berlin (DE); LICHTERFELD, Daniel, 12207 Berlin (DE)
(74) Vertreter: Eisenführ Speiser

(57) **Zusammenfassung**

Die Erfindung betrifft ein Klassifikatorsystem zum Klassifizieren von Zuständen eines durch messbare Systemparameter charakterisierten Systems. Das Klassifikatorsystem weist mehrere dezentrale Klassifikatoreinheiten auf, die jeweils ein oder mehrere binäre Klassifikationsmodelle oder ein oder mehrere, aus binären Klassifikationsmodellen generierte/zusammengesetzte Multiklassen-Klassifikationsmodelle verwirklichen. Das Klassifikatorsystem weist außerdem eine zentrale Klassifikatoreinheit auf, die mit den dezentralen Klassifikatoreinheiten zur Übertragung von die Klassifikationsmodelle definierenden Modellparameterwerten verbunden ist. Die Modellparameterwerte eines jeweiligen der dezentralen Klassifikationsmodelle sind durch Training der dezentralen Klassifikatoreinheit mit Trainingsdatensätzen gebildet, die unterschiedliche gemessene Systemparameterwerte der jeweils gleichen Systemparameter und einen einen Zustand des durch diese Systemparameter charakterisierten Systems repräsentierenden Zielwert enthalten. Die zentrale Klassifikatoreinheit ist ausgebildet, aus von verschiedenen dezentralen Klassifikatoreinheiten stammenden, dezentralen Modellparameterwerten zentrale Modellparameterwerte zu bilden, die ein zentrales binäres Klassifikationsmodell für die den Systemparametern zugeordnete Zustandsklasse definieren, und auf Basis von zentralen Modellparameterwerten, die binäre Klassifikationsmodelle für unterschiedliche Klassen definieren, zentrale Modellparameterwerte für ein Multiklassen-Klassifikationsmodell abzuleiten und so ein zentrales Multiklassifikationsmodell zu bilden.

## Beschreibung

Die Erfindung betrifft ein Klassifikatorsystem, dass mehrere föderierte binäre Klassifikatoreinheiten umfasst sowie ein Verfahren zum verteilten Erzeugen von Klassifikationsmodellen.

Binäre Klassifikatoreinheiten sind ausgebildet ein durch Parameterwerte beschriebenes Objekt oder einen durch Parameterwerte beschrieben Zustand eines Systems jeweils einer von zwei Klassen zuzuordnen, wobei die Klassen beispielsweise mögliche Zustände oder Objekte bedeuten können. Falls das System, dessen Zustand klassifiziert werden soll, nur zwei Zustände annehmen kann, z.B. Zustand A oder Zustand B, kann eine binäre Klassifikatoreinheit aus einem Eingangsdatensatz, der gemessene oder abgeleitete Eingangsparameterwerte enthält, einen Zugehörigkeitswert als Ausgangswert bilden, der anzeigt, zu welchem der beiden möglichen Zustände die Parameterwerte gehören, d.h. welchen von den zwei möglichen Zuständen das System zu dem Zeitpunkt, als die Parameterwerte gemessen wurden, angenommen hat. Der Zugehörigkeitswert muss nicht notwendig eindeutig sein, sondern kann auch eine Wahrscheinlichkeit dafür angeben, dass die Eingangsparameterwerte zum Zustand A oder zum Zustand B gehören. Ein möglicher Zugehörigkeitswert kann also z.B. 0.78 sein und bedeuten, dass sich das System mit 78% Wahrscheinlichkeit in dem Zustand A und mit 22% Wahrscheinlichkeit in dem Zustand B befunden hat. Falls ein System mehr als zwei Zustände annehmen kann, kann gleichwohl eine Zuordnung mit Hilfe von mehreren binären Klassifikatoreinheiten dadurch erfolgen, dass eine jeweilige binäre Klassifikatoreinheit ermittelt, wie groß die Wahrscheinlichkeit dafür ist, dass sich das System in einem der möglichen Zustände befindet. Wenn das System also beispielsweise einen der Zustände A, B oder C annehmen kann, kann eine erste Klassifikatoreinheit dazu ausgebildet sein, einen Zugehörigkeitswert zu bilden, der angibt, wie groß die Wahrscheinlichkeit ist, ob sich das System in dem Zustand A befindet. Diese Klassifikatoreinheit ordnet die Eingangsparameterwerte also entweder dem Zustand A oder dem Zustand Nicht-A zu. Entsprechend kann eine zweite Klassifikatoreinheit dazu ausgebildet sein, einen Zugehörigkeitswert zu bilden, der angibt, wie groß die Wahrscheinlichkeit ist, ob sich das System in dem Zustand B befindet. Diese zweite Klassifikatoreinheit ordnet die Eingangsparameterwerte also entweder dem Zustand B oder dem Zustand Nicht-B zu. Eine dritte binäre Klassifikatoreinheit kann zum Bestimmen der Zugehörigkeit zum Zustand B ausgebildet sein. Die Klassifikatoreinheiten können logisch hintereinandergeschaltet sein, so dass eine Prüfung auf die Zugehörigkeit zum Zustand B nur dann erfolgt, falls die Prüfung auf die Zugehörigkeit zum Zustand A ergibt, dass die Eingangsparameterwerte dem Zustand Nicht-A zuzuordnen sind.

Neben binären Klassifikatoreinheiten gibt es auch Multiklassen-Klassifikatoreinheiten, die ein durch Eingangsparameterwerte beschriebenes Objekt oder System auch einer von mehreren Klassen (mehr als zwei Klassen) zuordnen können, d.h. gleichzeitig für mehrere mögliche Objekte oder Zustände Zugehörigkeitswerte bilden können. Eine Multiklassen-Klassifikatoreinheit kann beispielweise im obigen Beispiel vier Zugehörigkeitswerte bilden, nämlich einen für den Zustand A, einen für den Zustand B, einen für den Zustand C und einen für den Zustand weder A noch B noch C.

Binäre sowie Multiklassen-Klassifikatoreinheiten können von künstlichen neuronalen Netzen gebildet sein. Künstliche neuronale Netze weisen eine Topologie auf, die von Knoten und Verbindungen zwischen den Knoten gebildet ist und bei der die Knoten in aufeinander folgenden Schichten organisiert sind. Die Knoten eines künstlichen neuronalen Netzes werden von künstlichen Neuronen gebildet, die einen oder mehrere Eingangswerte gewichtet Summieren und einen Ausgangswert ausgeben, der davon abhängt, ob die Summe der gewischten Eingangswerte eine Schwellwert überschreitet. Anstelle eines festen Schwellwertes kann ein künstliches Neuron auf die Summe der gewichteten Eingangswerte eine Sigmoidfunktion anwenden, also eine Art weiche Schwelle, bei der der Ausgangswert auch Werte zwischen Null und Eins annehmen kann.

Die in einem Eingangsdatensatz enthaltenen Eingangsparameterwerte werden den künstlichen Neuronen (Knoten) einer Eingangsschicht zugeordnet. Die künstlichen Neuronen der Eingangsschicht liefern ihre Ausgangswerte als Eingangswerte an typischerweise mehrere (oder alle) Neuronen der nächsten Schicht des künstlichen neuronalen Netzwerks. Ein Neuron in einer Ausgangsschicht des künstlichen neuronalen Netzwerks liefert schließlich den Zugehörigkeitswert, der angibt, mit welche Wahrscheinlichkeit (oder ob) die Eingangsparameterwerte zu einem bestimmten Zustand eines Systems oder zu einem bestimmten Objekt gehören. Typischerweise sind zwischen Eingangsschicht und Ausgangsschicht mehrere Zwischenschichten (hidden layers) vorgesehen, die zusammen mit der Eingangsschicht und der Ausgangschicht die Topologie des neuronalen Netzes definieren. Eine binäre Klassifikatoreinheit kann in der Ausgangsschicht zwei Neuronen aufweisen, nämlich eines, dass den Zugehörigkeitswert für die Klasse A und eines, dass den Zugehörigkeitswert für die Klasse Nicht-A als Ausgangswert liefert. Eine Multiklassen-Klassifikatoreinheit kann in der Ausgangsschicht mehrere Neuronen aufweisen, nämlich jeweils eines, dass einen Zugehörigkeitswert für eine der Klassen liefert, für die die Multiklassen-Klassifikatoreinheit trainiert wurde, und ein weiteres Neuron, dass die Wahrscheinlichkeit anzeigt, dass das durch die Eingangsparameterwerte beschriebene Objekt oder der durch die Eingangsparameterwerte beschriebene Zustand keiner der Klassen zuzuordnen ist, für die die Multiklassen-Klassifikatoreinheit trainiert wurde. Eine Multiklassen-Klassifikatoreinheit kann aus mehreren binären Teilklassifikationsmodellen derart gebildet sein, dass die Multiklassen-Klassifikatoreinheit sich aus mehreren parallelen binären Teilklassifikationsmodellen (im Folgenden auch als binäre Teilpfade bezeichnet) mit jeweils eigenen Zwischenschichten (hidden layers) zusammensetzt, wobei die mehreren parallelen binären Klassifikationsmodelle eine gemeinsame Eingangsschicht und eine gemeinsame Ausgangsschicht aufweisen.

Speziell für die Bildverarbeitung geeignete künstliche neuronale Netze sind faltende neuronale Netze (convolutional neural networks), bei denen auf eine von Eingangsparameterwerten gebildete Wertematrix in einer faltenden Schicht (convolutional Layer) eine vergleichsweise kleine Faltungsmatrix (Filterkernel) angewandt wird. Die Eingangswerte eines jeweiligen Neurons werden somit mittels einer diskreten Faltung ermittelt. Die Eingangswerte eines Neurons im Convolutional Layer berechnen sich als inneres Produkt der Faltungsmatrix mit den in einem jeweiligen Schritt aktuell zugeordneten Werten der Eingangswertematrix. Die vergleichsweise kleine Faltungsmatrix wird hierbei quasi schrittweise über die relativ größere Eingangswertematrix bewegt und jeweils das innere Produkt gebildet. Klassifikatoreinheit und speziell neuronale Netze zeichnen sich typischerweise durch ihre vorgegebene Topologie aus sowie durch die Modellparameterwerte, die die Gewichtung der Eingangswerte eines jeweiligen Neurons und die Funktion des Neurons definieren. Die Funktion des Neurons definiert, wie sich der Aussagewert des jeweiligen Neurons aus dessen gewichteten Eingangswerten ergibt. Die Funktion eines Neurons kann eine einfache Schwellwertfunktion sein und der zugehörige Modellparameterwert wäre dann der zugehörige Schwellwert. Die Funktion des Neurons kann aber auch beispielsweise eine Sigmoidfunktion sein, die durch entsprechende Modellparameterwerte parametrisiert sein kann. Alle Modellparameterwerte zusammen definieren ein Klassifikationsmodell, das zusammen mit der Topologie des neuronalen Netzes die jeweilige Klassifikatoreinheit definiert.

Die Modellparameterwerte für eine jeweilige Klassifikatoreinheit werden durch Training bestimmt. Bei einem Training (im Rahmen des maschinellen Lernens auch als Lernphase bezeichnet) werden einer Klassifikatoreinheit sowohl Eingangsparameterwerte als auch die dazugehörige Klasse (als Zielwert) vorgeben. In der dem Fachmann bekannter Weise werden dann in einem Optimierungsprozess die Modellparameterwerte für die Klassifikatoreinheit so bestimmt, dass sich ein hoher Zugehörigkeitswert zum dem Zielwert (also der vorgegebenen Klasse) ergibt, wenn die Klassifikatoreinheit einen Eingangsdatensatz mit Systemparameterwerten verarbeitet, wie er beim Training vorgegeben wurde.

Die vorgegebene Topologie einer Klassifikatoreinheit sowie die durch Training ermittelten Modellparameterwerte definieren ein jeweiliges Klassifikationsmodell, dass typischerweise allein durch den Satz zugrundeliegender Modellparameterwerte beschrieben werden kann, da die zugrundeliegende Topologie vorgeben ist. Ein Klassifikationsmodell ist somit beispielsweise durch die Topologie des zugrundeliegenden künstlichen neuronalen Netzes und durch die Modellparameterwerte definiert.

Wichtige Modellparameterwerte sind typischerweise die Gewichte, mit der die verschiedenen Eingangswerte eines jeweiligen Neurons gewichtet werden. In der Lernphase werden die Gewichte in einem iterativen Prozess schrittweise optimiert, und zwar derart, dass die Abweichung zwischen einem vorgegebenen Zielwert (d.h. einer vorgegeben Klasse) und dem Ausgangswert der Klassifikatoreinheit so gering wie möglich ist. Die Abweichung zwischen dem vorgegebenen Zielwert und dem Ausgangswert der Klassifikatoreinheit kann mittels eines Gütekriteriums bewertet werden und die Optimierung der Gewichte kann mittels eines Gradientenalgorithmus erfolgen, bei dem ein typischerweise quadratisches Gütekriterium optimiert wird, d.h. nach Minima des Gütekriteriums gesucht wird. Die Annäherung an ein Minimum erfolgt dabei mit Hilfe eines bekannten Gradientenalgorithmus, bei dem die Gradienten bestimmt werden, mit denen sich die Gewichte von Iterationsschritt zu Iterationsschritt verändern. Größere Gradienten entsprechen hierbei einer größeren Veränderung pro Iterationsschritt und kleine Gradienten einer kleineren Veränderung pro Iterationsschritt. In der Nähe eines gesuchten (lokalen) Minimums des Gütekriteriums sind die Veränderungen der Gewichte von Iterationsschritt zu Iterationsschritt - und damit der entsprechende Gradient - typischerweise relativ klein. Mit Hilfe der Gradienten können jeweils veränderte Gewichte für den nächsten Iterationsschritt bestimmt werden. Die iterative Optimierung wird solange fortgesetzt, bis ein vorgegebenes Abbruchkriterium erfüllt ist, z.B. das Gütekriterium ein vorgegebenes Maß erreicht hat oder eine vorgegebene Anzahl von Iterationsschritten erreicht sind.

Da sich die Systemparameterwerte verschiedener Zustände oder Objekte der gleichen Klasse unterscheiden können, wird eine Klassifikatoreinheit mit vielen, mehr oder weniger unterschiedlichen Eingangsdatensätzen für eine jeweilige Klasse trainiert und die Modellparameterwerte werden im Verlauf des Optimierungsprozesses so bestimmt, dass sie trotz einzelner abweichender Systemparameterwerte einen möglich zuverlässigen Zugehörigkeitswert für eine jeweilige Klasse liefern. Wenn beispielsweise eine vorgegebene Klasse für ein Objekt "Rose" ist, und die Systemparameterwerte Pixel eines Fotos sind, die die Farbe und Helligkeit eines Bildpunktes des Fotos repräsentieren, kommt es offensichtlich auf die Farbe der Blütenblätter der Rose weniger an als beispielweise auf deren Form, um das auf dem Foto abgebildete Objekt der Klasse "Rose" zuzuordnen. Das Training einer entsprechenden Klassifikatoreinheit mit vielen unterschiedlichen Fotos von Rosen führt also absehbar dazu, dass von der Farbe der Blütenblätter abhängige Eingangswerte im Ergebnis weniger stark gewichtet werden, als von der Form der Blütenblätter abhängige Eingangswerte, was zu entsprechend angepassten Modellparameterwerten führt.

Wenn die für das Training verwendeten Eingangsdatensätze zu ähnlich sind oder zu wenig verschiedene Varianten desselben Objekts oder Zustands repräsentierende Eingangsdatensätze für das Training zur Verfügung stehen, kann es zu der bekannten Überanpassung (overfitting) kommen. Würde eine Klassifikatoreinheit für das Objekt "Rose" beispielsweise nur mit Fotos von roten Rosen trainiert werden, ist es gut möglich, dass eine solche Klassifikatoreinheit für Fotos von weißen Rosen nur einen geringen Zugehörigkeitswert ermittelt, obwohl weiße Rosen genauso Rosen sind, wie rote Rosen.

Eine Möglichkeit, eine derartige Überanpassung zumindest teilweise zu vermeiden besteht darin verschiedene Klassifikatoreinheiten auf unterschiedlichen Datensätzen für die gleiche Klasse (oder mit Fall von Multiklassen-Klassifikatoreinheit für die gleichen Klassen) zu trainieren und die mittels verschiedener Klassifikatoreinheiten gewonnenen Modellparameterwerte zusammenzuführen. Dies ist als "verteiltes Lernen" bekannt. Probleme bereitet hier das effiziente Zusammenführen der Modelle und deren Modellparameterwerte.

Das Zusammenführen der Modelle kann während des Trainings, aber auch nach dem Training - also während oder nach der Lernphase - erfolgen. In der Praxis ist insbesondere das Zusammenführen der Gradienten relevant. Die Gradienten repräsentieren die Modellveränderungen - insbesondere die Veränderung der Gewichte für die Eingangswerte der Neuronene - zwischen den einzelnen Optimierungsschritten, die ein Maschinenlernalgorithmus in der Lernphase zum Optimieren der Modellparameter vornimmt. Es ist bekannt, dass nach jedem oder nach n Modellupdates (Iterationsschritten) die Modellveränderungen (Gradienten) zusammengeführt werden. Auf diese Weise wird ein globales Modell (für eine zentrale Klassifikatoreinheit) nur über lokale Gradienten lokaler Modelle gebildet, die von dezentralen Klassifikatoreinheiten erzeugt wurden. Ein derartiges Erzeugen zentraler Klassifikationsmodelle durch Zusammenführen von dezentral erzeugten Modellen ist unter anderem aus dem "Federated Learning" der Firma Google (Alphabet) bekannt.

Erfindungsgemäß wird ein Klassifikatorsystem zum Klassifizieren von Zuständen eines durch messbare Systemparameter charakterisierten Systems oder zum Klassifizieren von Objekten vorgeschlagen, dass mehrere dezentrale, d.h. lokale Klassifikatoreinheiten und eine zentrale Klassifikatoreinheit aufweist. Dabei können die dezentralen Klassifikatoreinheiten beispielsweise Clients und die zentrale Klassifikatoreinheit ein Server in einem Client-Server-System sein. In einem solchen System werden die dezentralen Klassifikatoreinheiten dezentral gebildet (trainiert) und anschließend zentral zu binären Klassifikatoreinheiten zusammengeführt, welche wiederum eine Multiklassen-Klassifikatoreinheit bilden können.

Eine Klassifikatoreinheit kann ein oder mehrere Klassifikationsmodelle verwirklichen. Insbesondere kann die zentrale Klassifikatoreinheit beispielsweise mehrere binäre Klassifikationsmodelle und auch ein Multiklassen-Klassifikationsmodell verwirklichen. Ein zentrales Multiklassen-Klassifikationsmodell kann beispielsweise aus zwei oder mehr dezentralen binären Modellen für verschiedene Klassen erzeugt werden. Auch die dezentralen Klassifikatoreinheiten können durch ein oder mehrere binäre Klassifikationsmodelle und/oder ein oder mehrere, aus binären Klassifikationsmodellen zusammengesetzte Multiklassen-Klassifikationsmodelle verwirklicht sein. Modellupdates solcher zusammengesetzten Modelle betreffen dann immer nur relevante Modellpfade.

Falls die Klassifikatoreinheit auf Basis künstlicher neuronaler Netze angelegt sind, ist ein jeweiliges Klassifikationsmodell beispielsweise durch die Topologie des zugrundeliegenden künstlichen neuronalen Netzes und durch die Modellparameterwerte definiert. Modellparameter sind beispielsweise Koeffizienten der ein jeweiliges künstliches Neuron definierenden Funktion (beispielsweise einer Sigmoidfunktion) und die Gewichte, mit der die Eingangswerte der künstlichen Neuronen gewichtet werden.

Der zu klassifizierende Zustand des Systems oder das zu klassifizierende Objekt ist dabei durch messbare oder abgeleitete Systemparameterwerte beschrieben. Abgeleitete Systemparameterwerte können beispielsweise Relationen zwischen gemessenen Systemparameterwerten beschreiben, z.B. Verteilungen oder Differenzen, Mittelwerte etc..

Die dezentralen Klassifikatoreinheiten sind ausgebildet, zu einem (jeweiligen) von Systemparameterwerten der messbaren Systemparameter gebildeten Eingangsdatensatz auf Basis von für eine jeweilige dezentrale Klassifikatoreinheit spezifischen Modellparameterwerten einen Zugehörigkeitswert zu ermitteln, der die Zugehörigkeit eines durch den von Systemparameterwerten der messbaren Systemparameter gebildeten Datensatz repräsentierten Zustands oder Objekts zu einer Zustands- bzw. Objektklasse anzeigt.

Die zentrale Klassifikatoreinheit ist mit den dezentralen Klassifikatoreinheiten zur Übertragung von Klassifikationsmodelle definierenden Modellparameterwerten verbunden. Beispielsweise werden die von den dezentralen Klassifikatoreinheiten erzeugten Modellparameterwerte auf eine zentrale Recheneinheit übertragen, die im Ergebnis ein zentrales (Multiklassen-) Klassifikationsmodell bildet und somit die zentrale Klassifikatoreinheit definiert.

Die Modellparameterwerte eines jeweiligen in einer dezentralen Klassifikatoreinheit definierten Klassifikationsmodells sind durch Training der dezentralen Klassifikatoreinheit mit von lokal ermittelten Systemparameterwerten gebildeten Trainingsdatensätzen und einer zugehörigen, vorgegebenen Zustands- oder Objektklasse gebildet. Die einem jeweiligen Trainingsdatensatz zugeordnete Zustands- oder Objektklasse bildet dabei einen Zielwert. Ein Trainingsdatensatz stellt einen Eingangsdatensatz für die zu trainierende Klassifikatoreinheit dar, der zusammen mit dem Zielwert ein Trainingsdatentupel bildet.

Der zu einem jeweiligen Trainingsdatentupel gehörende Zielwert (d.h. die vorgegebene Klasse, auch als "label" bezeichnet) kann explizit von einem Nutzer vorgegeben werden, z.B. indem der Nutzer einen Zielwert aus einer vorgegebenen Liste möglicher Zielwerte einen zu dem jeweiligen Eingangsdatensatz passenden Zielwert auswählt. Die Vorgabe durch enen Nutzer kann auch in Form einer textuellen Beschreibung erfolgen, aus der dann der Zielwert mittels Sprachverarbeitung (NLP, natural language processing) extrahiert wird. Entstehen Trainingsdaten, beispielsweise durch die Aufnahme eines Bildes oder die Eingabe von Informationen, kann der dazugehörige Zielwert somit über ein dafür geschaffenes Userinterface durch den Nutzer gegeben oder aus dem Nutzerverhalten automatisch generiert (beispielsweise mittels natural language processing aus einem Bericht). Nach diesem Generieren des Zielwerts erfolgt ein Update des zugehörigen dezentralen binären Klassifikationsmodells und die für das Training im Rahmen des Updates genutzten Daten, d.h. die Systemparameterwerte, müssen nicht länger gespeichert werden. Dies ist aus Gründen des Datenschutzes gerade im medizinischen Bereich vorteilhaft.

Vorzugsweise ist wenigstens eine der dezentralen Klassifikationseinheiten dazu ausgebildet, im Falle eines neuen Trainingsdatensatzes für eine Zustandsklasse das entsprechende dezentrale binäre Klassifikationsmodell für diese Zustandsklasse upzudaten und daraus resultierende upgedatete Modellparameterwerte und/oder im Rahmen des Updatens gewonnene Gradienten an die zentrale Klassifikatoreinheit zu übermitteln. In diesem Zusammenhang ist die zentrale Klassifikatoreinheit vorzugsweise dazu ausgebildet in Reaktion auf den Empfang upgedateter Modellparameterwerte und/oder Gradienten nur dasjenige zentrale binäre Klassifikationsmodell oder dasjenige zentrale Teilklassifikationsmodell eine Multiklassen-Klassifikationsmodells upzudaten, dass für die betroffene zustandsklasse trainiert ist.

Das Klassifikatorsystem weist mehrere unterschiedliche dezentrale Klassifikatoreinheiten auf, für die die dezentralen Modellparameterwerte eines jeweiligen Klassifikationsmodells das Ergebnis eines Trainings der jeweiligen dezentralen Klassifikatoreinheit mit Trainingsdatensätzen sind, die von unterschiedlichen gemessenen Systemparameterwerten der jeweils gleichen Systemparameter und einem einen Zustand des durch diese Systemparameter charakterisierten Systems repräsentierenden Zielwert, der die Zugehörigkeit der in dem Trainingsdatensatz enthaltenen Systemparameterwerte zu einer Zustandsklasse repräsentiert, sind.

Die zentrale Klassifikatoreinheit ist ausgebildet, aus von verschiedenen dezentralen Klassifikatoreinheiten stammenden, auf Basis der gemessenen Systemparameterwerte der jeweils selben Systemparameter gebildeten, dezentralen Modellparameterwerten und/oder im Rahmen der Modellbildung (iterativen Optimierung) auftretenden Gradienten zentrale Modellparameterwerte zu bilden, die ein zentrales Klassifikationsmodell für die den Systemparametern zugeordnete Zustandsklasse definieren.

Vorzugsweise ist die zentrale Klassifikatoreinheit außerdem dazu ausgebildet, auf Basis von zentralen Modellparameterwerten, die binäre Klassifikationsmodelle oder binäre Teilklassifikationsmodelle eines oder mehrerer dezentraler Multiklassen-Klassifikationsmodelle für unterschiedliche Klassen definieren, und/oder auf Basis der im Rahmen der Modellbildung (iterativen Optimierung) auftretenden Gradienten zentrale Modellparameterwerte für ein zentrales Multiklassen-Klassifikationsmodell abzuleiten. Dies kann auch jeweils nur für einzelne Teilklassifikationsmodelle erfolgen, zum Beispiel auch beim Update eines zentralen Klassifikationsmodells mit Hilfe von aktualisierten dezentralen Modellparameterwerten.

Vorzugsweise ist die zentrale Klassifikatoreinheit ausgebildet, von ihr gebildete zentrale Modellparameterwerte zu einer oder mehreren dezentralen Klassifikatoreinheiten (rück-) zu übertragen, so dass die jeweilige dezentrale Klassifikatoreinheit das entsprechende zentrale Klassifikationsmodell verkörpert. Die jeweilige dezentrale Klassifikatoreinheit kann in diesem Fall und auf diesem Wege auch eine Multiklassen-Klassifikatoreinheit sein. Auch ist es möglich, dass nur Teile, d.h. einzelne binäre Klassifikationsmodelle, eines von der zentralen Klassifikatoreinheit verwirklichten zentralen Multiklassen- Klassifikationsmodells zu einer oder mehreren der dezentralen Klassifikatoreinheit rückübertragen werden.

Die Erfindung schließt die Erkenntnis ein, dass die Approximation von Klassifikationsmodellen mit maschinellen Lernverfahren einen ausreichend großen Trainingsdatensatz oder Trainingsdatensätze verlangt, die eine möglichst gleichmäßige Klassenverteilung aufweisen. Diese Verteilungen sind in der Regel nur bei aufwändig aufbereiteten Datensätzen vorhanden und nur für Problemdomänen, die eine Zusammenstellung solcher Datensätze erlauben.

Die Erfindung schließt weiterhin die Erkenntnis ein, dass sich diese Trainingsdatensätze in der praktischen Anwendung oft aus Datenschutzgründen nicht zusammenstellen lassen. Datensätze sind auf unterschiedlichen dezentrale Einheiten verteilt, die ggf. unterschiedliche Verteilungen in den Datensätzen produzieren. Diese unterschiedlichen Verteilungen entstehen durch einen bestimmten Fokus der jeweiligen dezentralen Einheiten oder durch externe Faktoren der dezentralen Einheiten (z.B. geographisch bedingte Muster). Daraus resultiert, dass die auf den dezentralen Einheiten approximierten Modelle auf die vorliegende Verteilung überangepasst sind und stellenweise Modelle auf einzelnen dezentralen Einheiten nur einen Teil der Klassen (also z.B. der möglichen Zustände) abbilden. Ebenfalls kann nicht bestimmt werden, ob überhaupt genügend Daten pro Klasse vorhanden sind, da durch die Verteilung quantitative Studien im Voraus nicht möglich sind.

Das erfindungsgemäße Klassifikationssystem kann mit einem Verfahren betrieben werden, das das Training von binären Klassifikationsmodellen auf voneinander getrennten dezentralen Klassifikatoreinheiten umfasst. Das Verfahren umfasst außerdem das Übertagen der Modelle sowie das Zusammenfassen der binären Klassifikationsmodelle aus den dezentralen Klassifikatoreinheiten zu einem Mehrklassen-Klassifikationsmodell. Dabei können auch Modelle unterschiedlicher Typen verwendet werden. Die Modellzusammenführung muss dabei nicht ein Zusammenführen vollständiger Modelle sein, sondern kann auch ein Zusammenführen einzelner Gradienten oder Modellveränderungen sein.

Das Verfahren kann beispielsweise wie folgt ablaufen:
1. Ein Trainings-Eingangsdatentupel (bestehend aus einem Eingangsdatensatz, der Systemparameterwerte enthält und dem Zielwert, der eine Klasse vorgibt) wird in n (n = Anzahl der Klassen) Datentupel mit jeweils einem binären Zielwert aufgeteilt.
2. Jedes Datentupel wird verwendet, um die Modellparameterwerte von m (m = Anzahl unterschiedlicher Initialisierungen) Klassifikatoreinheiten des gleichen Typs (d.h. mit derselben Topologie) zu aktualisieren. Dieser Schritt muss für mindestens einen Modelltyp durchgeführt werden, kann aber mit beliebig vielen Modelltypen durchgeführt werden.
3. Vorzugsweise wird anschließend jeder Satz von Modellparameterwerten als Validierungsdatensatz zur Verfügung gestellt, der von der zentralen Klassifikatoreinheit gebildet wurde. Sofern eine Überanpassung erfolgt, wird eine Aktualisierung eines jeweiligen Satzes von Modellparameterwerten abgebrochen.
4. Ebenfalls ist eine manuelle Terminierung einer Aktualisierung eines jeweiligen Satzes von Modellparameterwerten auf einer dezentralen Klassifikatoreinheit möglich, da es bei einigen Modellen nicht zur Konvergenz kommt.
5. Nach der Terminierung aller Updateprozesse werden die Modellparameterwerte an die zentrale Klassifikatoreinheit gesendet.
6. Von der zentralen Klassifikatoreinheit werden die durch entsprechende Sätze zentraler Modellparameterwerte definierten binären Klassifikationsmodelle für jede Klasse und jeden Modelltyp zu einem jeweiligen zentralen binären Klassifikationsmodell zusammengefasst und so zentrale binäre Klassifikatoreinheiten definiert.
7. Vorzugsweise wird anschließend jede zentrale binäre Klassifikatoreinheit anhand eines globalen Validierungsdatensatzes validiert.
8. Die Validierung und die Kombination der binären Klassifikationsmodelle kann beliebig oft wiederholt werden.
9. Anschließend werden alle zentralen binären Klassifikationsmodelle zum einem klassenübergreifendem zentralen Multiklassen-Klassifikationsmodell zusammengeführt. Bis zu diesem Prozessschritt kann entschieden werden auf welche Klassen sich das zentrale Multiklassen-Klassifikationsmodell beschränken soll.

Ein erfindungsgemäßes Verfahren umfasst die Schritte:
- dezentrales Bilden mehrerer binärer Klassifikationsmodelle für einen Zielwert,
- Übermitteln von ein jeweiliges binäres Klassifikationsmodell definierenden Modellparameterwerten und/oder Gradienten an eine zentrale Klassifikatoreinheit und
- Bilden eines zentralen binären Klassifikationsmodells aus den übermittelten Modellparameterwerten und/oder durch die zentrale Klassifikatoreinheit.

Vorzugsweise umfasst das Verfahren zusätzlich den Schritt:
- Bilden eines zentralen Multiklassen-Klassifikationsmodells aus mehreren binären Klassifikationsmodellen durch die zentrale Klassifikatoreinheit.
   Das Verfahren kann auch den Schritt aufweisen
- Übermitteln von ein zentrales Klassifikationsmodell definierenden Modellparameterwerten an eine oder mehrere dezentrale Klassifikatoreinheiten.

Vorzugsweise erfolgt das Übermitteln von ein jeweiliges binäres Klassifikationsmodell definierenden Modellparameterwerten und/oder Gradienten an die zentrale Klassifikatoreinheit nach jedem Update eines dezentralen binären Klassifikationsmodells, oder in fest vorgegebenen oder in Abhängigkeit eines durch einen Parameter vorgegebenen Abständen, oder nach Abschluss des Bildens eines jeweiligen dezentralen binären Klassifikationsmodells.

Im Rahmen dieser Beschreibung werden die folgenden Begriffe verwendet:
Die Systemparameterwerte sind Parameterwerte, die ein technisches oder biologisches System beschreiben, also beispielsweise ein Objekt wie eine Maschine, ein Datenverarbeitungssystem, einen Körperteil, eine Pflanze oder dergleichen.

Die Systemparameterwerte können auch Parameterwerte sein, die einen Zustand eines technischen oder biologischen Systems beschreiben, also beispielsweise einen Funktionszustand, einen Betriebszustand, einen Fehlerzustand, einen Gesundheitszustand, einen Trainingszustand oder dergleichen.

Systemparameter sind messbare Parameter, z.B. Dimensionen, Masse, Entfernungen, Helligkeit, Temperatur, etc. oder aus messbaren Parametern abgeleiteter Parameter, z.B. Werteverteilungen, Differenzen, Mittelwerte etc.

Ein jeweiliger Systemparameterwert ist gemessener oder abgeleiteter (numerischer) Wert eines jeweiligen Systemparameters.

Zusammengehörige Systemparameterwerte können einen Eingangsdatensatz bilden, der eine Struktur hat, über die die im Datensatz enthaltenen (numerischen) Systemparameterwerte eindeutig einem jeweiligen Systemparameter zugeordnet sind

Ein Klassifikationsmodell kann beispielsweise durch ein trainiertes künstliches neuronales Netz definiert sein oder ein durch Koeffizienten einer linearen Regression definiertes Modell, das als Ausgangswert(e) einen oder mehrere Zugehörigkeitswert(e) liefert, die jeweils die Zugehörigkeit der in den strukturierten Eingangsdatensätzen enthaltenen Parameterwerte zu einem jeweiligen Systemzustand anzeigen.

Modellparameter können Gewichte eines trainierten neuronalen Netzes oder Koeffizienten einer linearen Regression sein und Modellparameterwerte sind dann die (numerischen) Werte der jeweiligen Gewichte eines trainierten neuronalen Netzes oder der Koeffizienten einer linearen Regression.

Die Systemparameterwerte ergeben (jeweils) einen Eingangsdatensatz für die lokalen binären Klassifikatoreinheiten.

Im Falle der Implementierung in Form eines neuronalen Netzes werden die einzelnen Systemparameterwerte eines Eingangsdatensatzes in der Eingangsschicht (und die resultierenden internen Werte (Ausgangswerte der Knoten) in den folgenden Schichten) gewichtet. Die Gewichte können als Modellparameterwerte extrahiert und z.B. in Form einer Matrix an die zentrale Klassifikatoreinheit übermittelt werden.

In der Trainingsphase werden die Modellparameterwerte dezentral dadurch erzeugt, dass die dezentralen Klassifikatoreinheiten lokal mit Hilfe von Systemparameterwerte enthaltenden Eingangsdatensätzen und zugehörigem, binären Zielwert (Klasse) trainiert werden.

Die dezentral erzeugten Modellparameterwerte und/oder Gradienten können zu der zentralen Klassifikatoreinheit und ggf. zu anderen dezentralen Klassifikatoreinheiten übertragen werden.

Die verschiedenen dezentralen Klassifikatoreinheiten können für verschiedene binäre Zielwerte (d.h. für verschiedene Klassen) trainiert werden.

Aus den übertragenen Modellparameterwerten und/oder Gradienten erzeugt die zentrale Klassifikatoreinheit mehrere zentrale binäre Klassifikationsmodelle, in die für eine jeweilige Klasse die Modellparameterwerte all derjenigen dezentralen Klassifikatoreinheiten eingehen, die für diese Klasse trainiert wurden. Die zentrale Klassifikatoreinheit kann verschiedene binäre Klassifikationsmodelle auch zu einem zentralen Multiklassen-Klassifikationsmodell zusammenführen.

Nach der Trainingsphase werden die so zentral erzeugten Klassifikationsmodelle (zentral erzeugte Sätze von Modellparameterwerten) auf die dezentralen Klassifikatoreinheiten zurückgespiegelt (Deployment). Ist das zentral erzeugte Klassifikationsmodell ein Multiklassen- Klassifikationsmodell, können auch nur Teile dieses Multiklassen- Klassifikationsmodells auf eine oder mehrere der dezentralen Klassifikatoreinheiten rückübertragen werden (Teil-Deployment)
In der Anwendungsphase werden die zentral erzeugten Klassifikationsmodelle (d.h. Klassifikationsmodelle auf Basis der zentral erzeugten Modellparameterwerte) von den dezentralen Klassifikatoreinheiten angewandt. Diese Klassifikationsmodelle sind vorzugsweise Multiklassen-Klassifikationsmodelle, können aber auch binäre Klassifikationsmodelle sein, die zusammen mit der jeweils vorgegebenen Topologie eine Multiklassen-Klassen-Klassifikatoreinheit oder eine binäre Klassifikatoreinheit definieren.

An die zentrale Klassifikatoreinheit werden nur Modellparameterwerte und die zugehörige Klasse (d.h. der zugehörige binäre Zielwert) übermittelt, aber keine Systemparameterwerte übermittelt. Damit wird ein Datenschutz in Bezug auf die Systemparameterwerte, also z.B. Fotos, erzielt.

Die Erfindung soll nun anhand eines Beispiels mit Bezug auf die Figuren beschrieben werden. Von den Figuren illustriert
- Fig. 1:: das Zusammenführen mehrerer dezentraler binärer Klassifikationsmodelle zu einem zentralen binären Klassifikationsmodell;
- Fig. 2:: das Bilden eines Multiklassen-Klassifikationsmodell aus mehreren (zentralen) binären Klassifikationsmodellen und
- Fig. 3:: ein zweistufiges Verfahren zum verteilten Erzeugen von Klassifikationsmodellen.

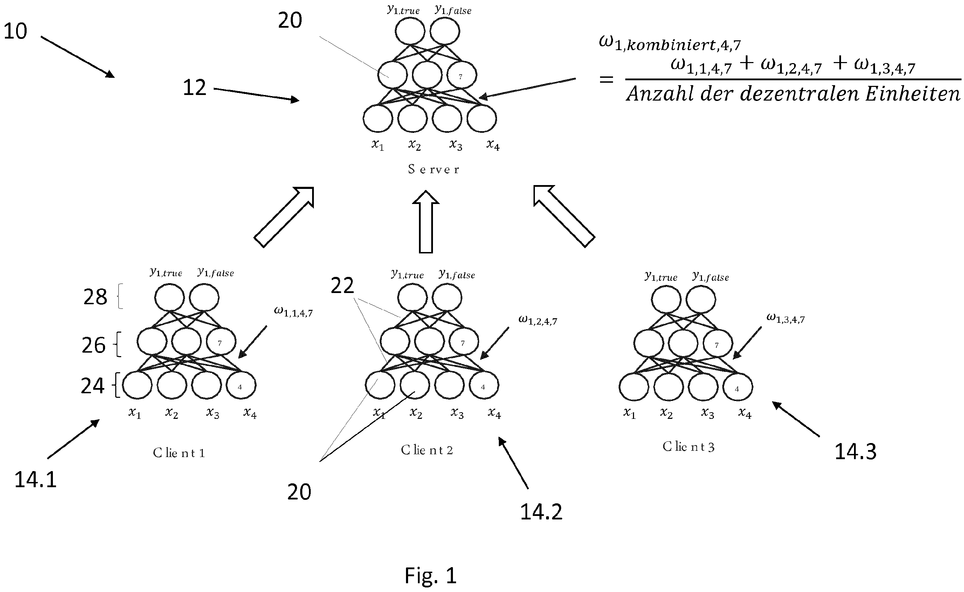

Figur 1 zeigt beispielshaft ein Klassifikatorsystem 10 mit einer zentralen Klassifikatoreinheit 12 und drei dezentralen Klassifikatoreinheiten 14.1, 14.2 und 14.3. Die zentrale Klassifikatoreinheit 12 kann in Form eines Servers in einem Server-Client-Netzwerk verwirklicht sein. Die dezentralen Klassifikatoreinheiten 14.1, 14.2, 14.3 können dann Clients in dem Server-Client-Netzwerk sein.

In dem dargestellten Ausführungsbeispiel verwirklichen sowohl die zentrale Klassifikatoreinheit 12 als auch die dezentralen Klassifikatoreinheiten 14.1, 14.2, 14.3 jeweils Klassifikationsmodelle, die durch künstliche neuronale Netzwerke definiert sind.

Die Implementierung der künstlichen neuronalen Netzwerke ist für die dargestellten Klassifikatoreinheiten 12, 14.1, 14.2 und 14.3 identisch. Das bedeutet, dass die in den Klassifikatoreinheiten implementierten künstlichen neuronalen Netzwerke jeweils eine identische Topologie aufweisen. Die Topologie eines jeweiligen künstlichen neuronalen Netzwerkes ist durch künstliche Neuronen 20 und Verbindungen 22 zwischen den künstlichen Neuronen 20 definiert. Die künstlichen Neuronen 20 bilden somit Knoten in einem Netzwerk. In an sich bekannter Weise sind die künstlichen Neuronen 20 in mehreren Schichten angeordnet, nämlich in einer Eingangsschicht 24, einer oder mehreren versteckten Schichten (hidden layer) 26 und einer Ausgangsschicht 28.

In einem jeweiligen künstlichen neuronalen Netzwerk einer jeweiligen Klassifikatoreinheit 12, 14.1, 14.2, 14.3 erhalten die Neuronen 20 mehrere Eingangswerte, die gewichtet und aufsummiert werden, so dass sich ein Summenwert gibt, auf den eine Schnellwert- oder eine Sigmoidfunktion angewendet wird, die einen von dem Summenwert und der angewandten Sigmoid- oder Schwellwertfunktion abhängigen Ausgangswert liefert. Dieser Ausgangswert eines jeweiligen künstlichen Neurons 20 wird einem oder mehreren - typischerweise allen - künstlichen Neuronen 20 einer nachfolgenden Schicht als Eingangswert übermittelt. Auf diese Weise erhalten die künstlichen Neuronen 20 einer nachfolgenden, beispielsweise versteckten Schicht wie beispielsweise der Schicht 26 ihre Eingangswerte, die wiederrum individuell gewichtet und aufsummiert werden. Die so gebildeten Summenwerte werden in jedem der Neuronen 20 wiederrum beispielsweise über eine Sigmoid-oder Schwellwertfunktion in Ausgangswerte überführt.

Die künstlichen Neuronen 20 der Ausgangsschicht 28 liefern jeweils einen Ausgangswert, der ein Zugehörigkeitswert ist, welcher angibt, mit welcher Wahrscheinlichkeit ein Zustand oder ein Objekt, der oder das durch die den künstlichen Neuronen 20 der Eingangsschicht 26 zugeführten Systemparameterwerte charakterisiert ist, einer bestimmten Klasse von Objekten oder Zuständen zuzuordnen ist. Eines der künstlichen Neuronen 20 der Ausgangsschicht 28 gibt dabei die Wahrscheinlichkeit an, dass die in Form eines Eingangsdatensatzes bereitgestellten Systemparameterwerte ein System beschreiben, dass einer bestimmten Klasse zuzuordnen ist (y_{1, true}) und ein zweites künstliches Neuron der Ausgangsschicht 28 gibt die Wahrscheinlichkeit an, dass das durch die in einem Eingangsdatensatz enthaltenen Systemparameterwerte beschriebene System nicht dem Zustand zuzuordnen ist (y_{1, false}). Die durch das jeweilige künstliche neuronale Netz definierte binäre Klassifikatoreinheit liefert somit zwei Zugehörigkeitswerde, nämlich einen, der die Wahrscheinlichkeit der Zugehörigkeit zu einer Klasse angibt, für die das künstliche neuronale Netz trainiert wurde, und einen zweiten Zugehörigkeitswert, der die Wahrscheinlichkeit angibt, dass das durch die Systemparameterwerte des Eingangsdatensatzes beschriebene System nicht zu der Klasse gehört, für das künstliche neuronale Netz trainiert wurde.

In dem dargestellten Ausführungsbeispiel implementieren sowohl die dezentralen Klassifikatoreinheiten 14.1, 14.2 und 14.3 als auch die zentrale Klassifikatoreinheit 12 jeweils nur ein einziges neuronales Netz. Es ist möglich, dass jede der Klassifikatoreinheiten 12, 14.1, 14.2 und 14.3 auch mehrere neuronale Netze implementiert. Die neuronalen Netze können in ihrer Topologie auch voneinander abweichen. Wichtig ist nur, dass die neuronalen Netze für eine bestimmte Objekt- oder Zustandsklasse sowohl in den dezentralen Klassifikatoreinheiten 14.1, 14.2 und 14.3 als auch in der zentralen Klassifikatoreinheit 12 identisch aufgebaut sind.

Durch die Topologie eines jeweiligen künstlichen neuronalen Netzes und die zugehörigen Modellparameterwerte wird jeweils ein Klassifikationsmodell für eine Klasse (bei binären Klassifikationsmodellen) oder für mehrere Klassen (bei Multiklassen-Klassifikationsmodellen definiert). Modellparameterwerte sind hierbei die Werte der Gewichte ω, mit der die Eingangswerte der einzelnen Neuronen 20 gewichtet werden, sowie Koeffizienten, die die Funktion der künstlichen Neuronen 20 beschreiben, also beispielsweise die Sigmoidfunktion oder den Schwellwert einer Schwellwertfunktion. Bei bekannter Topologie ist ein Klassifikationsmodell somit durch die Modellparameterwerte eindeutig beschrieben.

Die passenden Modellparameterwerte werden bei vorgegebener Topologie dadurch erzeugt, dass ein jeweiliges künstliches neuronales Netz mit Trainingsdatensätzen und einem zugehörigen Zielwert trainiert werden. Die Trainingsdatensätze enthalten Systemparameterwerte und bilden zusammen mit dem Zielwert ein Eingangsdatentupel für das Training (Trainingsdatentupel). Ein Zielwert gibt die Klasse an, der die in dem Eingangsdatensatz enthaltenen Systemparameterwerte zuzuordnen sind. Die Klasse kann dabei beispielsweise ein bestimmtes von mehreren Objekten oder einen bestimmten von mehreren Zuständen bezeichnen. Wie eingangs erwähnt, werden künstliche neuronale Netze typischerweise mit einer Vielzahl von verschiedenen Trainingsdatentupeln für die selbe Klasse trainiert.

In dem dargestellten Ausführungsbeispiel werden die dezentralen Klassifikatoreinheiten 14.1, 14.2 und 14.3 typischerweise mit einer Vielzahl unterschiedlicher Trainingsdatentupel trainiert, wobei sich die Trainingsdatentupel, mit denen beispielsweise die erste dezentrale Klassifikatoreinheit 14.1 trainiert wird, von den Trainingsdatetupeln unterscheidet, mit denen die zweite dezentrale Klassifikatoreinheit 14.2 trainiert wird, da die jeweiligen Systemparameterwerte typischerweise unterschiedlich anfallen. Das bedeutet, dass auch dann, wenn die künstlichen neuronalen Netze aller drei dezentralen Klassifikatoreinheiten 14.1, 14.2 und 14.3 für jeweils die gleiche Klasse trainiert werden, die resultierenden Modellparameterwerte und damit auch die resultierenden Klassifikationsmodelle mehr oder weniger stark von einander abweichen.

Zum Bilden eines vereinheitlichten (im Beispielsfall binären) zentralen Klassifikationsmodells übermitteln die dezentralen Klassifikatoreinheiten 14.1, 14.2 und 14.3 jeweils die Modellparameterwerte des von ihnen implementierten Klassifikationsmodells an die zentrale Klassifikatoreinheit 12. Diese kombiniert dann die Modellparameterwerte so, dass beispielsweise aus allen Modellparameterwerten für einen jeweiligen Modellparameter (also für jeweils ein spezielles Gewicht in dem künstlichen neuronalen Netzwerk) ein Mittelwert gebildet wird. Dies ist in Figur 1 durch die abgebildete Formel angedeutet. Die so gebildeten Mittelwerte sind dann die Modellparameterwerte des zentralen Klassifikationsmodells.

Auf diese Weise kann die zentrale Klassifikatoreinheit 12 ein zentrales binäres Klassifikationsmodell für eine bestimmte Klasse (beispielsweise Index 1) bilden.

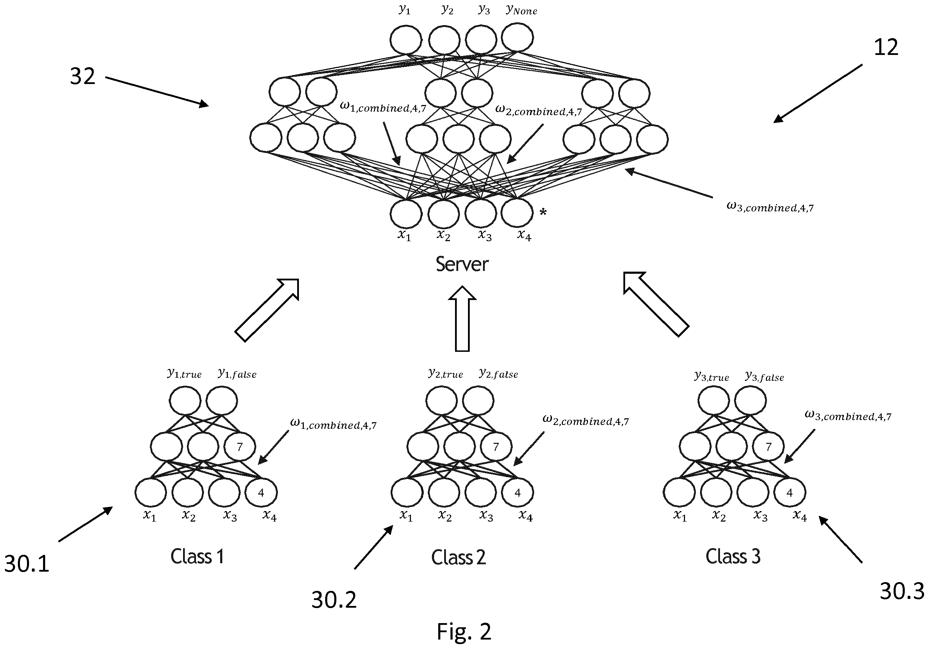

Figur 2 zeigt, dass eine zentrale Klassifikatoreinheit 12 mehrere Klassifikationsmodelle gleichzeitig implementieren kann, die durch unterschiedliche künstliche neuronale Netzwerke implementiert sein können. In dem in Figur 2 abgebildeten Beispiel sind dies drei verschiedene neuronale Netzwerke 30.1, 30.2 und 30.3, die jeweils ein zentrales binäres Klassifikationsmodell für eine jeweils andere Klasse (also für ein jeweils anderes Objekt beziehungsweise einen ganz anderen Zustand) definieren.

Die zentrale Klassifikatoreinheit 12 ist ausgebildet, aus den im Beispielsfall drei verschiedenen binären Klassifikationsmodellen 30.1, 30.2 und 30.3 ein kombiniertes Multiklassen-Klassifikationsmodell 32 zu bilden. Das Multiklassen-Klassifikationsmodell 32 setzt sich im Ergebnis aus drei binären Teilklassifikationsmodellen zusammen, die eine gemeinsame Eingangsschicht 34 und eine gemeinsame Ausgangsschicht 36 haben und jeweils eigene Zwischenschichten 38 (hidden layers). Falls ein derartiges Multiklassen-Klassifikationsmodell von der zentralen Klassifikatoreinheit oder einer der dezentralen Klassifikatoreinheit umgesetzt ist, ist es möglich, nur Modellparameter zu einem der Teilklassifikationsmodelle zwischen einer der lokalen Klassifikatoreinheiten und der zentralen Klassifikatoreinheit auszutauschen. Beispielsweise kann vorgesehen sein, dass die Übertragung von Modellparameterwerten von einer dezentralen Klassifikatoreinheit zu der zentralen Klassifikatoreinheit immer dann erfolgt, wenn ein durch die dezentrale Klassifikatoreinheit implementiertes (Teil-) Klassifikationsmodell durch neue Trainingsdatensätze aktualisiert wurde und so aktualisierte dezentrale, d.h. lokale, Modellparameterwerte gebildet wurden. Dies führt in der Folge dazu, dass auch das von der zentralen Klassifikatoreinheit implementierte zentrale (Multiklassen-) Klassifikationsmodell aktualisiert wird. Die daraus resultierenden aktualisierten zentralen Modellparameterwerte können dann wiederum von der zentralen Klassifikatoreinheit an die entsprechenden dezentralen Klassifikatoreinheiten übertragen werden, um die durch diese implementierten dezentralen Klassifikationsmodelle ebenfalls entsprechend zu aktualisieren.

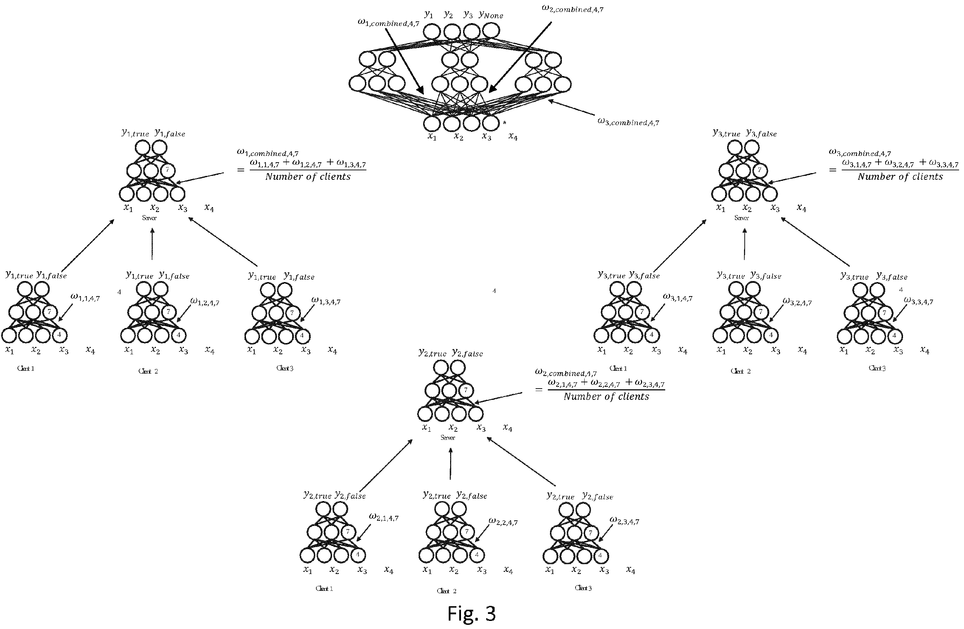

Somit ergibt sich ein zweistufiges Verfahren, bei dem in einer ersten Stufe dezentrale Klassifikationsmodelle und daraus mehrere zentrale binäre Klassifikationsmodelle gebildet werden und in einer zweiten Stufe aus den zentralen binären Klassifikationsmodellen ein Multiklassen-Klassifikationsmodell gebildet wird. Dies ist in Figur 3 dargestellt.

Das im Ergebnis von der zentrale Klassifikatoreinheit 12 generierte und verwirkliche kombinierte Multiklassen-Klassifikationsmodell 32 kann anschließend wenigstens auf einige der dezentralen Klassifikatoreinheiten rückübertragen werden (Deployment), so dass ein schließlich von diesen dezentralen Klassifikatoreinheiten implementiertes Klassifikationsmodell auch unter Berücksichtigung von Trainingsdatensätzen anderer dezentraler Klassifikatoreinheiten optimiert ist.

Die Rückübertragung (Deployment) kann auch nur teilweise erfolgen, indem beispielsweise nur eines oder einige ausgewählte der binären Klassifikationsmodelle 30.1, 30.2 und 30.3 rückübertragen werden, also nicht das gesamte, von der zentralen Klassifikatoreinheit 12 verwirklichte Multiklassen-Klassifikationsmodell.

Nach der Bildung des zentralen Klassifikationsmodells können die Aktualisierungen dieses zentralen Klassifikationsmodells und anschließend der dezentralen Klassifikationsmodell so erfolgen, wie vorstehend beschrieben.

## Patentansprüche

1. Klassifikatorsystem zum Klassifizieren von Zuständen eines durch messbare Systemparameter charakterisierten Systems, wobei das Klassifikatorsystem
- mehrere dezentrale Klassifikatoreinheiten aufweist, die jeweils ein oder mehrere binäre Klassifikationsmodelle oder ein oder meherere, aus binären Klassifikationsmodellen generierte/zusammengesetzte Multiklassen-Klassifikationsmodelle verwirklichen, die ausgebildet sind,
zu einem (jeweiligen) von Systemparameterwerten der messbaren Systemparameter gebildeten Datensatz
auf Basis von für eine jeweilige dezentrale Klassifikatoreinheit spezifischen Modellparameterwerten
einen Zugehörigkeitswert zu ermitteln, der die Zugehörigkeit eines durch den von Systemparameterwerten der messbaren Systemparameter gebildeten Datensatz repräsentierten Zustands zu einer Zustandsklasse anzeigt,
und
- eine zentrale Klassifikatoreinheit aufweist, die mit den dezentralen Klassifikatoreinheiten zur Übertragung von die Klassifikationsmodelle definierenden Modellparameterwerten verbunden ist
**dadurch gekennzeichnet, dass** die Modellparameterwerte eines jeweiligen der dezentralen Klassifikationsmodelle durch Training der dezentralen Klassifikatoreinheit mit von lokal ermittelten Systemparameterwerten gebildeten Trainingsdatensätzen als Eingangsdatensätzen und einer zugehörigen, vorgegebenen Zustandsklasse als Zielwert gebildet sind,
wobei das Klassifikatorsystem mehrere unterschiedliche dezentrale Klassifikatoreinheiten aufweist, deren dezentrale Modellparameterwerte jeweils das Ergebnis eines Trainings der jeweiligen dezentralen Klassifikatoreinheit mit Trainingsdatensätzen sind, die von unterschiedlichen gemessenen Systemparameterwerten der jeweils gleichen Systemparameter und einem einen Zustand des durch diese Systemparameter charakterisierten Systems repräsentierenden Zielwert, der die Zugehörigkeit der in dem Trainingsdatensatz enthaltenen Systemparameterwerte zu einer Zustandsklasse repräsentiert, gebildet, und
wobei die zentrale Klassifikatoreinheit ausgebildet ist,
- aus von verschiedenen dezentralen Klassifikatoreinheiten stammenden, auf Basis der gemessenen Systemparameterwerte der jeweils selben Systemparameter gebildeten, dezentralen Modellparameterwerten zentrale Modellparameterwerte zu bilden, die ein zentrales binäres Klassifikationsmodell für die den Systemparametern zugeordnete Zustandsklasse definieren, und
- auf Basis von zentralen Modellparameterwerten, die binäre Klassifikationsmodelle für unterschiedliche Klassen definieren, zentrale Modellparameterwerte für ein Multiklassen-Klassifikationsmodell abzuleiten und so ein zentrales Multiklassifikationsmodell zu bilden.

2. Klassifikatorsystem gemäß Anspruch 1, **dadurch gekennzeichnet,**
**dass** die zentrale Klassifikatoreinheit ausgebildet ist, von ihr gebildete zentrale Modellparameterwerte zu einer oder mehreren dezentralen Klassifikatoreinheiten zu übertragen, so dass die jeweilige dezentrale Klassifikatoreinheit das entsprechende zentrale Klassifikationsmodell verkörpert.

3. Klassifikatorsystem gemäß Anspruch 2, **dadurch gekennzeichnet,**
**dass** die zentrale Klassifikatoreinheit ausgebildet ist, zentrale Modellparameterwerte eines oder mehrerer binärer Teilklassifikationsmodelle eines zentralen Multiklassen-Klassifikationsmodell zu einer oder mehreren dezentralen binären Klassifikatoreinheiten zu übertragen.

4. Klassifikatorsystem gemäß wenigstens einem Ansprüche 1 bis 3, **dadurch gekennzeichnet,**
**dass** die zentrale Klassifikatoreinheit und die dezentralen Klassifikatoreinheiten Klassifikationsmodelle durch künstliche neuronale Netzte mit einer jeweils gleichen Topologie verwirklichen, die durch in mehreren Schichten organisierte, von künstlichen Neuronen gebildete Knoten und gewichte Verbindungen zwischen den Knoten definiert ist und
**dass** die Modellparameterwerte Werte der Gewichtungen der Verbindungen zwischen den Knoten und ggf. Schwellwerte eines jeweiligen, einen Knoten bildenden Neurons sind.

5. Klassifikatorsystem gemäß wenigstens einem Ansprüche 1 bis 4, **dadurch gekennzeichnet,**
**dass** wenigstens eine der dezentralen Klassifikationseinheiten dazu ausgebildet ist, im Falle eines neuen Trainingsdatensatzes für eine Zustandsklasse das entsprechende dezentrale binäre Klassifikationsmodell oder Teilklassifikationsmodell für diese Zustandsklasse upzudaten und daraus resultierende upgedatete Modellparameterwerte und/oder im Rahmen des Updatens gewonnene Gradienten an die zentrale Klassifikatoreinheit zu übermitteln,
wobei die zentrale Klassifikatoreinheit ausgebildet ist in Reaktion auf den Empfang upgedateter Modellparameterwerte und/oder Gradienten nur dasjenige zentrale binäre Klassifikationsmodell oder dasjenige zentrale Teilklassifikationsmodell eine Multiklassen-Klassifikationsmodells upzudaten, dass für die betroffene Zustandsklasse trainiert ist.

6. Klassifikatorsystem gemäß wenigstens einem Ansprüche 1 bis 5, **dadurch gekennzeichnet,**
**dass** wenigstens eine der dezentralen Klassifikationseinheiten dazu ausgebildet ist, einen Zielwert für einen Trainingsdatensatz durch Sprachverarbeitung einer natürlich-sprachlichen Beschreibung des Zustands zu gewinnen, zu dem die lokal ermittelten Systemparameterwerten für den Trainingsdatensatz gehören.

7. Verfahren zum verteilten Erzeugen und Updaten von Klassifikationsmodellen, wobei das Verfahren die Schritte aufweist:
- dezentrales Bilden mehrerer binärer Klassifikationsmodelle und/oder eines Multiklassen-Klassifikationsmodells für einen Zielwert oder mehrere Zielwerte,
- Übermitteln von ein jeweiliges binäres Klassifikationsmodell oder binäre Teilpfade eines Multiklassen-Klassifikationsmodells definierenden Modellparameterwerten und/oder Gradienten an eine zentrale Klassifikatoreinheit und
- Bilden oder Updaten eines zentralen Klassifikationsmodells aus den übermittelten Modellparameterwerten durch die zentrale Klassifikatoreinheit.

8. Verfahren gemäß Anspruch 7, wobei das Verfahren zusätzlich den Schritt:
- Bilden eines zentralen Multiklassen-Klassifikationsmodells aus mehreren binären Klassifikationsmodellen durch die zentrale Klassifikatoreinheit
aufweist.

9. Verfahren gemäß Anspruch 7 oder 8, wobei das Verfahren zusätzlich den Schritt:
- Übermitteln von ein zentrales Klassifikationsmodell definierenden Modellparameterwerten an eine oder mehrere dezentrale Klassifikatoreinheiten
aufweist.

10. Verfahren gemäß der Ansprüche 8 und 9, **dadurch gekennzeichnet**, das nur binäre Teilklassifikationsmodelle eines zentralen Multiklassen-Klassifikationsmodells an eine oder mehrere dezentrale Klassifikatoreinheiten übermittelt werden.

11. Verfahren gemäß wenigstens eines der Ansprüche 7 bis 10, bei dem das Übermitteln von ein jeweiliges binäres Klassifikationsmodell oder Teilklassifikationsmodell definierenden Modellparameterwerten und/oder Gradienten an die zentrale Klassifikatoreinheit nach jedem Update eines dezentralen binären Klassifikationsmodells oder Teilklassifikationsmodells erfolgt, oder in fest vorgegebenen oder in Abhängigkeit eines durch einen Parameter vorgegebenen Abständen, oder nach Abschluss des Bildens eines jeweiligen dezentralen binären Klassifikationsmodells oder Teilklassifikationsmodells.
